# EUROPEAN PATENT SPECIFICATION

(11) **EP 3 790 372 B1**
(45) Date of publication and mention of the grant of the patent: **28.06.2023**
(21) Application number: 19722130.2
(22) Date of filing: 07.05.2019
(51) Int. Cl.: A01D 41/12, A01D 41/127, G01S 7/35, A01D 43/073, G01S 13/88

(54) **SYSTEM AND METHOD FOR LOCATING A TRAILER WITH RESPECT TO AN AGRICULTURAL MACHINE**
SYSTEM UND VERFAHREN ZUM LOKALISIEREN EINES ANHÄNGERS GEGENÜBER EINER LANDWIRTSCHAFTLICHEN MASCHINE
SYSTÈME ET PROCÉDÉ DE LOCALISATION D'UNE REMORQUE PAR RAPPORT À UNE MACHINE AGRICOLE

(30) Priority: 07.05.2018 BE 201805294
(43) Date of publication of application: 17.03.2021
(73) Proprietor: CNH Industrial Belgium N.V., 8210 Zedelgem (BE)
(72) Inventor: POSSELIUS, John H., Ephrata, Pennsylvania 17522 (US); FERRARI, Luca, 41043 Formigine (Modena) (IT); LENZINI, Nicola, 41027 Pievepelago (Modena) (IT); ROVATI, Luigi, 41126 Modena (IT); VITETTA, Giorgio Matteo, 41121 Modena (IT)
(74) Representative: CNH Industrial IP Department
(86) International application number: PCT/EP2019/061729
(87) International publication number: WO 2019/215185

(56) References cited:
- EP-A1- 0 070 340
- EP-A1- 1 356 729
- EP-A1- 2 798 939
- US-B2- 6 606 571
- US-B2- 9 642 305
- Wikipedia: "Radar", , 24 April 2018 (2018-04-24), XP055538099, Retrieved from the Internet: URL:https://en.wikipedia.org/w/index.php?t itle=Radar&oldid=838034233 [retrieved on 2019-01-03]

## Description

### BACKGROUND OF THE INVENTION

The present invention relates to agricultural machines and, more specifically, to locating a position of a trailer with respect to an agricultural machine.

The detection of a position of a trailer with respect to a position of an agricultural machine, such as a combine harvester or a forage harvester, or any type of harvesting machine that harvests or collects crops from the field, is important for accurately unloading the crop to the trailer while the machine is either actively harvesting the crop or even when the machine is stationary in the field. In a conventional operation, an operator of the machine uses mirrors or other visual tools, or simple glances sideways out of a window, for positioning an unload tube of the machine with respect to the location of the trailer. However, operator error can result in harvested crop being lost or valuable time being squandered, either by diverting attention of the operator from driving the machine forward for harvesting the crop, or by positioning the unload tube incorrectly with respect to the trailer.

Thus, an ability to detect the trailer, or for example, the edges of the trailer, in an automated fashion, would potentially improve crop yields, reduce harvest time, and enable an operator to maintain concentration elsewhere.

One solution would be to use automated optical techniques for detecting the location of a trailer (or edges of a trailer) with respect to an agricultural machine. However, a main challenge of using automated optical techniques is due to the presence of obscurants (e.g. dust, straw, ...) in the field of operation. Such obscurants limit the feasibility of using many automated optical techniques. Another challenge is that there are a limited number of points available on a trailer for which automated optical techniques may collect information, thereby limiting the accuracy of locating the trailer.

In EP 2 798 939 A1, a three-dimensional imaging device, which may be radar or ultra-sonic based is mounted to a controllable transfer device of a forage harvester for capturing a trailer and showing it on a display. EP 0 070 340 A1 and US 9,642305 B2 describe the use of radar in a similar way.

What is needed in the art is a system and method that can overcome some of the previously described disadvantages of known optical systems and methods.

### SUMMARY OF THE INVENTION

The present invention provides an agricultural machine as defined in appended claim 1. The agricultural machine according to the invention includes a chassis, an unload conveyance having a first end connected to the chassis and a second end opposite the first end, and a cab mounted to the chassis. The agricultural machine further includes a radar system positioned in association with the second end of the unload conveyance, wherein the radar system includes at least one transmitting antenna, at least one receiving antenna, and a radar module configured to process a first signal for transmission by the at least one transmitting antenna and process second signals received by the at least one receiving antenna for determining location of one or more points of a receptacle with respect to a location of the agricultural machine. The second signals include reflections of the first signal from the one or more points of the receptacle.

According to another (or preferred) aspect of the invention, the agricultural machine further includes a display in communication with the radar system, wherein the radar module is further configured to transmit the location of the one or more points of the receptacle to the display for display.

According to another aspect of the invention, the agricultural machine further includes a control unit electrically coupled to the display and to an input for entering input data comprising one or more dimensions of the receptacle.

According to another aspect of the invention, the agricultural machine further includes a control unit coupled to the display and to an input for entering input data associated with a manufacturer name and/or model of the receptacle, wherein the control unit comprises a memory configured to store a plurality of pictures of receptacles and associated input data. According to another aspect of the invention, the display is configured to display a drawing of the receptacle based upon the entered input data, wherein the drawing is superimposed on the location of the one or more points of the receptacle.

According to another aspect of the invention, the input data further includes one or more dimensions of the agricultural machine or a manufacturer name and/or model of the agricultural machine, and the display is further configured to display the drawing of the receptacle superimposed on the location of the one or more points of the receptacle with respect to a drawing of at least the second end of the unload conveyance.

According to another aspect of the invention, the control unit is electrically coupled to the radar module, and the radar module is further configured to receive the input data and process the input data and the second signals for determining the location of the one or more points of the receptacle with respect to the location of the agricultural machine. According to another aspect of the invention, the agricultural machine further includes a control unit mounted to the cab and electrically coupled to the radar system, and one or more actuators connected between the chassis and the unload conveyance. The one or more actuators are electrically coupled to the control unit, wherein the radar module is further configured to generate one or more control signals based upon the location of one or more points of the receptacle with respect to the second end of the unload conveyance and transmit the one or more control signals to the one or more actuators via the control unit for positioning the second end of the unload conveyance with respect to the location of the one or more points of the receptacle.

According to another aspect of the invention, one or more points of the receptacle comprise one or more reflectors, and wherein the second signals comprise reflections of the first signal from the one or more reflectors.

According to the invention, the radar system is a frequency-modulated continuous-wave radar system, wherein the first signal is a continuous-wave signal, and wherein the radar module comprises a signal generator configured to generate the continuous-wave signal and a modulator configured to frequency-modulate the continuous-wave signal.

According to the invention, the radar module further includes at least one demodulator configured to demodulate the second signals received by the at least one receiving antenna for generating an in-phase and a quadrature signal for each of the at least one receiving antenna, at least one analog-to-digital converter configured to generate a digital in-phase signal and a digital quadrature signal for each of the at least one receiving antenna, and an adder configured to combine the digital in-phase signal and the digital quadrature signal for each of the at least one receiving antenna for generating a complex envelope signal for each of the at least one receiving antenna. The radar module further includes at least one of: at least one filter configured to filter the complex envelope signal for each of the at least one receiving antenna, and at least one Fast Fourier Transform, FFT, module configured to process the complex envelope signal for each of the at least one receiving antenna for generating a received frequency-domain signal for each of the at least one receiving antenna and process the frequency-modulated continuous-wave signal for generating a reference frequency-domain signal. Furthermore, the radar module further includes at least one of: at least one threshold module configured to filter out frequency components of the received frequency-domain signal for each of the at least one receiving antenna having amplitudes less than a pre-determined threshold value, and at least one comparison module for comparing one or more frequency components of at least one threshold-filtered received frequency-domain signal of the received frequency-domain signal for each of the at least one receiving antenna to one or more frequency components of the reference frequency-domain signal for determining a distance to the one or more points of the receptacle.

According to another aspect of the invention, the radar module further includes an angle of arrival module configured to determine at least one phase difference between a frequency component of a first received frequency-domain signal for a first receiving antenna and a frequency component of a second received frequency-domain signal for at least one second receiving antenna, determine an angle of arrival of the second signals received by the first and at least one second receiving antennae based upon the at least one phase difference, and determine the location of the one or more points of the receptacle based upon the angle of arrival and the distance to the one or more points.

In accordance with an aspect, which is not covered by the claims, a method is provided for determining location of a receptacle with respect to an agricultural machine including a chassis, an unload conveyance having a first end connected to the chassis and a second end opposite the first end, a cab mounted to the chassis, and a radar system positioned in association with the second end of the unload conveyance, the method including processing a first signal, transmitting the processed first signal by at least one transmitting antenna, receiving second signals by at least one receiving antenna, wherein the second signals comprise reflections of the first processed signal from one or more points of the receptacle, and processing the second signals received by the at least one receiving antenna for determining a location of the one or more points of the receptacle with respect to a location of the agricultural machine.

According to another aspect, method further includes transmitting the location of the one or more points of the receptacle to a display, mounted to the cab, for display.

According to another aspect, the method further includes entering input data to the display, wherein the input data includes one or more of: one or more dimensions of the receptacle, a manufacturer name and/or model of the receptacle, one or more dimensions of the agricultural machine, and a manufacturer name and/or model of the agricultural machine, and displaying, by the display, a drawing of the receptacle based upon the entered input data, wherein the drawing is superimposed on the location of the one or more points of the receptacle with respect to a drawing of at least the second end of the unload conveyance.

According to another aspect, the method further includes receiving the input data, and processing the input data and the second signals for determining the location of the one or more points of the receptacle with respect to the location of the second end of the unload conveyance.

According to another aspect, the method further includes generating one or more control signals based upon the location of the one or more points of the receptacle with respect to the second end of the unload conveyance, and transmitting the one or more control signals to one or more actuators coupled between the chassis and the unload conveyance for positioning the second end of the unload conveyance with respect to the location of the one or more points of the receptacle.

According to another aspect, the method further includes generating a continuous-wave signal, wherein processing the first signal further comprises frequency-modulating the continuous-wave signal.

According to another aspect, the method further includes at least one of demodulating the second signals received by the at least one receiving antenna for generating an in-phase and a quadrature signal for each of the at least one receiving antenna, generating a digital in-phase signal and a digital quadrature signal for each of the at least one receiving antenna, and combining the digital in-phase signal and the digital quadrature signal for each of the at least one receiving antenna for generating a complex envelope signal for each of the at least one receiving antenna. The method further includes at least one of filtering the complex envelope signal for each of the at least one receiving antenna, and Fast Fourier Transform, FFT, processing the envelope signal for each of the at least one receiving antenna for generating a received frequency-domain signal for each of the at least one receiving antenna and FFT processing the frequency-modulated continuous-wave signal for generating a reference frequency-domain signal. The method further includes at least one of threshold filtering out frequency components of the received frequency-domain signal for each of the at least one receiving antenna having amplitudes less than a pre-determined threshold value, and comparing one or more frequency components of at least one threshold-filtered received frequency-domain signal of the received frequency-domain signal for each of the at least one receiving antenna to one or more frequency components of the reference frequency-domain signal for determining a distance to the one or more points of the trailer.

According to another aspect, the method further includes determining at least one phase difference between a frequency component of a first received frequency-domain signal for a first receiving antenna and a frequency component of a second received frequency-domain signal for at least one second receiving antenna, determining an angle of arrival of the second signals received by the first and at least one second receiving antennae based upon the at least one phase difference, and determining the location of the one or more points of the receptacle based upon the angle of arrival and the distance to the one or more points.

An advantage of the system and method of using radar to determine a location of a receptacle with respect to an agricultural machine as described herein is that radar uses wavelengths that can penetrate dust and crop for detecting points on a receptacle, such as a trailer.

Another advantage of the system and method described herein is to enable an operator of the agricultural machine to input either dimensions of the receptacle, or a code associated with a manufacturer name and/or model of the receptacle, or any other information related to the receptacle, to assist the radar module in determining locations of points on the receptacle. For example, the radar module may not be able to select between several location possibilities for a given point, due to dust, fog, or other air-borne impediments, for example. However, if the radar system has known receptacle dimensions available, such as height, width, and/or length of the receptacle, the radar module may be able to use these dimensions to select the correct location of a given receptacle point from several possibilities.

A further advantage of the system and method described herein is to enable an operator, via a display mounted in the cab, to see the location of the receptacle with respect to an unload conveyance (or an end of the unload conveyance), thereby enabling the operator to more easily and effectively position the unload conveyance, such as an unload tube, with respect to the receptacle for unloading a harvested and/or stored crop.

Yet another advantage of the system and method described herein is to provide control signals from the radar module to actuators of the unload conveyance for automatically positioning the unload conveyance (or the end of the unload conveyance) with respect to the receptacle for unloading a harvested and/or stored crop.

### BRIEF DESCRIPTION OF THE DRAWINGS

The above-mentioned and other features and advantages of this invention, and the manner of attaining them, will become more apparent and the invention will be better understood by reference to the following description of embodiments of the invention taken in conjunction with the accompanying drawings, wherein:
Fig. 1 is an exemplary embodiment of an agricultural machine including a radar system, formed in accordance with the present invention;
Fig. 2 is an exemplary embodiment of the radar system illustrated in Fig. 1, formed in accordance with the present invention; and
Fig. 3 is an exemplary embodiment of the radar module of the radar system illustrated in Fig. 2, formed in accordance with the present invention.

Corresponding reference characters indicate corresponding parts throughout the several views. The exemplifications set out herein illustrate embodiments of the invention, and such exemplifications are not to be construed as limiting the scope of the invention in any manner.

### DETAILED DESCRIPTION OF THE INVENTION

The present invention relates to a system and method for identifying a location of a receptacle, such as a trailer, with respect to an agricultural machine by implementing the agricultural machine with a radar system. It is possible to determine a distance to an object (e.g., to a point on a trailer) and an angle-of-arrival of a radar signal reflected from the point on the trailer, the accuracy of which may be enhanced by some specific post-processing of the radar signals. Then, by converting the distance and angle-of-arrival values to coordinates (e.g., to (x, y) cartesian coordinates) with respect to the radar system, or with respect to an unload conveyance of the machine, it is possible to have information on the location of the trailer with respect to the vehicle or the unload conveyance.

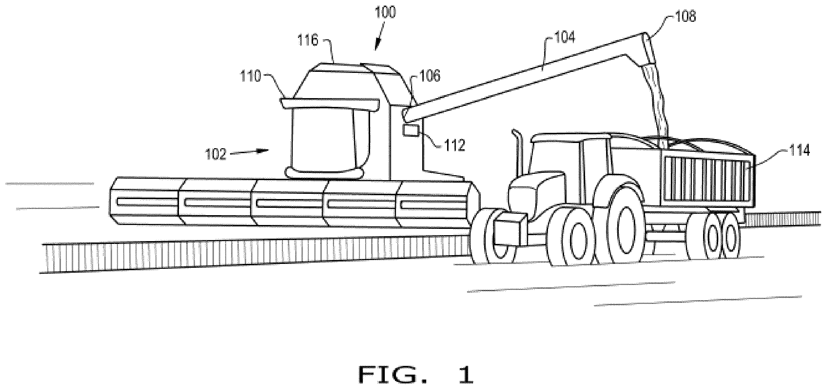

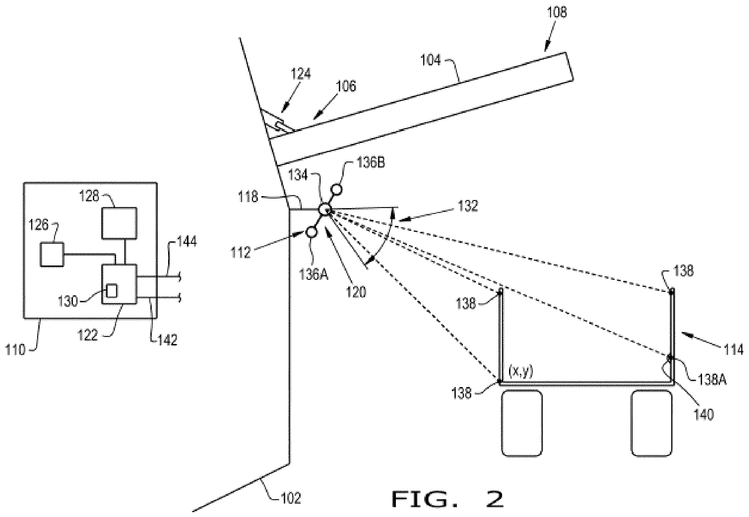

Referring now to the drawings, and more particularly to Fig. 1, there is shown an agricultural machine 100 including a chassis 102, an unload conveyance 104 having a first end 106 connected to the chassis and a second end 108 opposite the first end, a cab 110 mounted to the chassis 102, and a radar system 112 positioned in association with the second end 108 of the unload conveyance 104, according to one embodiment of the invention. In another embodiment of the invention, the radar system 112 is mounted to the chassis 102 directly below the first end 106 of the unload conveyance 104, however, the scope of the present invention covers the radar system 112 mounted anywhere on the chassis 102 from which the unload conveyance 104 may be viewed. In another embodiment, the chassis 102 may form part of the cab 110, and thus the radar system 112 may be mounted to the cab 110, and yet in another embodiment, the radar system 112 may be mounted to the unload conveyance 104. Although the agricultural machine 100 illustrated in Fig. 1 is a combine harvester, the scope of the invention covers all types of agricultural machines, such as forage harvesters, that are configured to unload a collected crop into a nearby receptacle 114. The receptacle 114 may be a trailer, for example, or any type of container, stationary or mobile, for receiving a harvested crop. The unload conveyance 104 conveys the collected crop, typically contained in a grain tank 116 forming an upper part of the chassis 102, from the grain tank 116 to the receptacle 114. The unload conveyance 104 may also be referred to as an unload tube, and may be, for example, an auger or conveyor type unload tube. The first end 106 of the unload tube 104 is moveably (e.g., rotatably and/or translationally) coupled to the chassis 102 in order to position and maintain the second end 108 of the unload tube 104 over the trailer 114 for reception of the collected crop. An operator of the agricultural machine 100 may be able to position the unload tube 104 via input to a control unit (shown in Fig 2) for controlling actuators (shown in Fig. 2) coupled between the chassis 102 and the unload tube 104.

Fig. 2 is an exemplary embodiment of the radar system 112 illustrated in Fig. 1, formed in accordance with the present invention. As illustrated, the radar system 112 is mounted to the chassis 102. The radar system 112 may include a mounting arm 118 mounted to the chassis 102, and a radar module 120 connected to the mounting arm 118. In one embodiment, the radar module 120 is either moveably (e.g., rotationally or translationally) connected to the mounting arm 118, or fixed to the mounting arm 118, however in other embodiments, the mounting arm 118 is either moveably connected to the chassis 102, or fixed to the chassis 102. In another embodiment, the mounting arm 118 is optional, in which case the radar module 120 is connected to the chassis 102, either moveably or fixed.

In one embodiment of the invention, a control unit 122 is mounted to the cab 110, preferably inside the cab 110. The control unit 122 may be electrically coupled to the radar module 120 and to at least one actuator 124 coupled between the chassis 102 and the unload tube 104. The control unit 122 is electrically coupled to an input 126 and a display 128, and includes a memory 130. An operator may enter instructions (e.g., input data) to the input 126 for orienting the radar module 120 with respect to the chassis 102, thereby orienting antennas (described below) of the radar module 120 to generally point in a direction of the trailer 114, whose exact location is to be determined. As known to one of skill in the art, radar systems, such as radar system 112, has a particular field of view 132 based at least partly upon the particular design of a transmitting antenna.

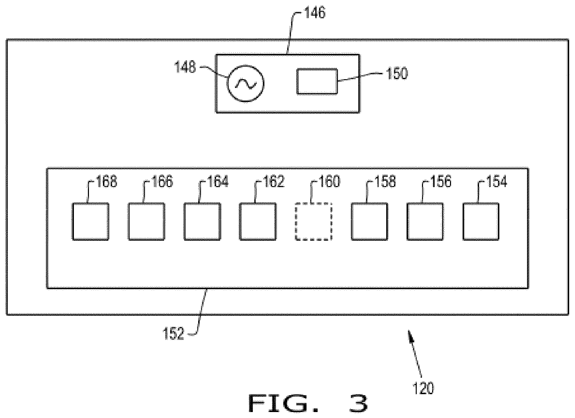

The radar module 120 includes a transmitting antenna 134 and at least two receiving antennae 136A and 136B, either integrated with or mounted on the radar module 120. According to the invention, and as described more fully below in conjunction with Fig. 3, the radar module 120 is configured, via corresponding hardware (such as central processing units or microprocessors, for example), software and/or firmware, to process a first signal for transmission via the transmitting antenna 134, and process second signals received by the two or more receiving antennas 136. The second signals include reflections of the first signal from one or more points 138 of the nearby trailer 114. In one embodiment, edges of trailers may produce the strongest reflections, however, in other embodiments, the trailer 114 may be equipped with reflectors 140 attached to various points of the trailer 114, such as point 138A, to enhance reflections from all types of surfaces of the trailer 114, including flat surfaces or surfaces which do not have sharp edges.

According to the invention, and as described more fully below in conjunction with Fig. 3, the radar module 120 includes modules for performing signal processing functions such as signal generation, modulation, demodulation, filtering, signal combination, Fast Fourier Transforms (FFTs), and signal comparison. In an embodiment of the invention, and as discussed more fully below, the radar module 120 may also be configured to receive and process input data entered by an operator to the control unit 122 via the input 126 or via the display 128, in conjunction with processing the first and second signals in determining the location of one or more points of the trailer 114. In another embodiment, and as discussed more fully below, the radar module 120 may be configured to generate control signals, based upon the determined location of one or more points of the trailer 114, for controlling at least one actuator 124 connected to the unload tube 104 for positioning the unload tube 104 over the trailer 114. In one embodiment of the invention, the radar module 120 sends the control signals to the control unit 122, either wirelessly or via a cable 142, and the control unit 122 sends the control signals to the at least one actuator 124, either wirelessly or via a cable 144, for controlling the at least one actuator 124.

Fig. 3 is an exemplary embodiment of the radar module 120 of the radar system 112 illustrated in Fig. 2, formed in accordance with the present invention. For ease of illustration, the transmitting antenna 134 and the two or more receiving antennas 136 are not shown, however as mentioned above, the antennas 134, 136 may either be integrated with the radar module 120, or may be mounted on extensions (not shown) to the radar module 120. The radar system 112 is a frequency-modulated continuous-wave (FMCW) radar system, as known to those of skill in the art.

The radar module 120 includes a transmitter unit 146 including a signal generator 148 for generating a continuous-wave signal, and a modulator 150 configured for frequency-modulating a continuous-wave signal, and sending the FMCW signal to the transmitting antenna 134 for transmission. The scope of the present invention covers the known methods of frequency-modulating a continuous wave signal, based on, for example, sine waves, saw-tooth waves, etc.

The radar module 120 also includes a receiver unit 152 including a demodulator 154 configured to demodulate the second signals received by the two or more receiving antennas 136 for generating an in-phase and a quadrature baseband signal for each of the two or more receiving antennae 136, an analog-to-digital converter 156 configured to generate a digital in-phase signal and a digital quadrature signal for each of the at least two receiving antennas 136, an adder 158 configured to combine the digital in-phase signal and the digital quadrature signal for each of the at least two receiving antennas 136 for generating a complex envelope signal for each of the at least two receiving antennas 136, an optional filter 160 configured to filter the envelope signal for each of the at least two receiving antennas 136, and an FFT module 162 configured to process the envelope signal for each of the at least two receiving antennas 136 for generating a received frequency-domain signal for each of the at least two receiving antennas 136. In one embodiment, the FFT module 162 is also configured to process the frequency-modulated continuous-wave signal for generating a reference frequency-domain signal.

The radar module 120 further includes a threshold module 164 configured to filter out frequency components of the received frequency-domain signal for each of the at least two receiving antennae 136 having amplitudes less than a pre-determined threshold value, and a comparison module 166 for comparing one or more frequency components of one or more threshold-filtered received frequency-domain signals to one or more frequency components of the reference frequency-domain signal for determining a distance to the one or more points 138 of the trailer 114.

In one embodiment, since the frequency of the FMCW signal varies in time, then, at any given time, the difference in frequency between frequency components (e.g., a main frequency component) of the FMCW first signal that is to be transmitted at the given time (i.e., referred to as the reference frequency-domain signal) and the frequency components (e.g., a main frequency component) of a received processed second signal (i.e., a received frequency-domain signal) at the same given time is a function of the distance between the radar module 120 and a point 138 on the trailer 114 from which the first signal is reflected.

In addition, the radar module 120 includes an angle of arrival module 168 configured to determine a plurality of phase differences between frequency components of received frequency-domain signals corresponding to signals received at a plurality of receiving antennas 136. By determining the phase shift between a larger number of received frequency-domain signals corresponding to a larger number of receiving antennas 136, the accuracy of the determined angle of arrival of the received signals increases.

By way of an exemplary embodiment, the angle of arrival module 168 is configured to determine a phase difference between a frequency component of a first received frequency-domain signal corresponding to second signals received at a first receiving antenna, e.g., antenna 136A, and a frequency component of a second received frequency-domain signal corresponding to second signals received at a second receiving antenna, e.g., antenna 136B, determine an angle of arrival of the second signals received by the first and second receiving antennae based upon the phase difference, and thus determine the location of the one or more points 138 of the trailer 114 based upon the angle of arrival and the distance to the one or more points 138. In one embodiment, the phase difference between a second signal received at first antenna and a second signal received at a second antenna is related to a direction of arrival of the second signals at the antennae (e.g., the larger the phase difference, the larger the angle of arrival with respect to a vector that is normal to a line drawn between the two antennae), and thus one of skill in the art can compute the angel of arrival based upon the phase difference. One of skill in the art can also compute the locations of the point on the trailer from which the second signals are reflected, based upon the determined distance to the point and the angle of arrival of the second signals.

In one embodiment of the invention, and as illustrated in Fig. 2, a determined location of a point on the trailer 114 may be represented by (x, y) cartesian coordinates in a vertical plane oriented such that longitudinal axes of the two or more antennae 136 are perpendicular to the vertical plane.

In another embodiment, the display 128 is mounted to the cab 110, for example, inside the cab 110. The display 128 is configured to display the locations of one or more points 138 of the trailer 114. The input 126, such as a keypad, or a microphone for receiving voice commands, or a port to which a smart phone or other personal electronic devices may be connected, is electrically coupled to the control unit 122. However, the display 128 may be configured to receive input data via a touch-sensitive screen. In one embodiment, the input data may include any combination of: one or more dimensions of the trailer 114, a manufacturer name and/or model of the trailer 114, one or more dimensions of the agricultural machine 100, one or more dimensions of a component of the machine 100 such as the unload tube 104, or a manufacturer name and/or model of the agricultural machine 100. In one embodiment, the display 128 is electrically coupled, either wirelessly or wired, to the radar system 112 via the control unit 122.

In another embodiment, the display 128 is configured to display the location of the one or more points 138 of the trailer 114 with respect to either the harvester machine 100 (e.g., with respect to the radar module 120) or with respect to the unload tube 104 or the second end 108 of the unload tube 104. In another embodiment, the display 128 is configured to display the location of the one or more points 138 of the trailer 114 superimposed with a drawing or a picture of the trailer 114 and with either the unload tube 104 or the second end 108 of the unload tube 104, such that an operator can see the position of the unload tube 104 with respect to the location of the trailer 114. In one embodiment, the memory 130 of the control unit 122 is configured to store a plurality of trailer dimensions, drawings, or pictures associated with different manufacturers and/or models.

In another embodiment, the radar module 120 is further configured to receive any of the above-described input data. When the radar module 120 is unable to determine a sufficient number of points 138 on the trailer 114 to accurately represent a location of the trailer 114, to an operator of the machine 100 via the display 128, then the radar module 120 is configured to utilize any input data or data stored in memory to assist in determining additional points (not shown) on the trailer 114 such that all of the determined points provide a sufficient representation of the trailer 114. One example of a sufficient representation is when the points 138 represent a sufficient outline of the trailer 114, such that an operator can correctly position the unload tube 104 with respect to the trailer 114, or as discussed further below, such that the radar module 120 can accurately position, via control signals, the unload tube 104 automatically via activation of one or more unload tube actuators 124 to accurately orient the unload tube 104 with respect to the location of the trailer 114.

In yet another embodiment of the invention, and as mentioned above, the agricultural machine 100 includes one or more actuators 124 connected between the chassis 102 and the unload tube 104. The one or more actuators 124 preferably are connected to a region of the unload tube 104 about the first end 106 of the tube 104, and are configured to provide one or more of translation of the tube 104, rotation of the tube 104 about a longitudinal axis of the tube, or rotation of the tube 104 about a transverse axis of the tube 104. Although the unload tube 104 is illustrated and described as a tube, the scope of the invention covers other forms and shapes of unload conveyances. The one or more actuators 124 may be electrically or hydraulically controlled, and are well known on the art of heavy machinery. The one or more actuators 124 are electrically coupled to the radar module 120 via the control unit 122, for example, via cables 142, 144 or wirelessly.

In one embodiment, the radar module 120 is configured to generate one or more control signals based upon the determined location of the one or more points 138 of the trailer 114 with respect to the second end 108 of the unload tube 104 and transmit the one or more control signals to the one or more actuators 124 via the control unit 122 for positioning the second end 108 of the unload tube 104 with respect to the determined location of the one or more points 138 of the trailer 114.

In another embodiment of the invention, the trailer 114 may include one or more reflectors 140 (Fig. 2) in order to enhance reflections of the radar signals from the trailer 114. Although the reflectors may be attached to edges of the trailer 114, in order to enhance reflections from the edges, the reflectors may be attached to any surface area of the trailer 114. Determination of locations of edges of the trailer 114, as enhanced by the reflectors, is particularly beneficial when displaying the locations of the edges on the display 128 for orientating the unload tube 104, either manually by an operator using the control unit 122 for controlling the position of the unload tube 104 via the one or more actuators 124, or automatically via control signals sent from the radar module 120 to the actuators 124 via the control unit 122 for automatically positioning the unload tube 104.

## Claims

1. An agricultural machine (100), comprising:
a chassis (102);
an unload conveyance (104) having a first end (106) connected to the chassis (102) and a second end (108) opposite the first end (106); and
a cab (110) mounted to the chassis (102),
**characterized by**
a radar system (112) positioned in association with the second end (108) of the unload conveyance (104),
the radar system (112) comprising:
at least one transmitting antenna (134);
at least one receiving antenna (136); and
a radar module (120) configured to process a first signal for transmission by the at least one transmitting antenna (134) and process second signals received by the at least one receiving antenna (136) for determining location of one or more points (138) of a receptacle (114) with respect to a location of the agricultural machine (100), wherein the second signals comprise reflections of the first signal from the one or more points (138) of the receptacle (114), **characterised in that** the radar system (112) is a frequency-modulated continuous-wave radar system, wherein the first signal is a continuous-wave signal, and wherein the radar module (120) comprises a signal generator (148) configured to generate the continuous-wave signal and a modulator (150) configured to frequency-modulate the continuous-wave signal,
the radar module (120) further comprising:
at least one demodulator (154) configured to demodulate the second signals received by the at least one receiving antenna (136) for generating an in-phase and a quadrature signal for each of the at least one receiving antenna (136);
at least one analog-to-digital converter (156) configured to generate a digital in-phase signal and a digital quadrature signal for each of the at least one receiving antenna (136);
at least one adder (158) configured to combine the digital in-phase signal and the digital quadrature signal for each of the at least one receiving antenna (136) for generating a complex envelope signal for each of the at least one receiving antenna (136);
at least one filter (160) configured to filter the envelope signal for each of the at least one receiving antenna (136);
at least one Fast Fourier Transform, FFT, module (162) configured to process the complex envelope signal for each of the at least one receiving antenna (136) for generating a received frequency-domain signal for each of the at least one receiving antenna (136) and process the frequency-modulated continuous-wave signal for generating a reference frequency-domain signal;
at least one threshold module (164) configured to filter out frequency components of the received frequency-domain signal for each of the at least one receiving antenna (136) having amplitudes less than a pre-determined threshold value; and
at least one comparison module (166) for comparing one or more frequency components of at least one threshold-filtered received frequency-domain signal of the received frequency-domain signal for each of the at least one receiving antenna (136) to one or more frequency components of the reference frequency-domain signal for determining a distance to the one or more points (138) of the receptacle (114).

2. The agricultural machine according to claim 1, further comprising a display (128) in communication with the radar system (112), and wherein the radar module (120) is further configured to transmit the location of the one or more points (138) of the receptacle (114) to the display (128) for display.

3. The agricultural machine according to claim 2, further comprising a control unit (122) electrically coupled to the display (128) and to an input (126) for entering input data comprising one or more dimensions of the receptacle (114).

4. The agricultural machine according to claim 2, further comprising a control unit (122) coupled to the display (128) and to an input (126) for entering input data associated with a manufacturer name and/or model of the receptacle (114), wherein the control unit (122) comprises a memory (130) configured to store a plurality of pictures of receptacles (114) and associated input data.

5. The agricultural machine according to claims 3 or 4, wherein the display (128) is configured to display a drawing of the receptacle (114) based upon the entered input data, wherein the drawing is superimposed on the location of the one or more points (138) of the receptacle (114).

6. The agricultural machine according to claim 5, wherein the input data further comprises one or more dimensions of the agricultural machine (100) or a manufacturer name and/or model of the agricultural machine (100), and wherein the display (128) is further configured to display the drawing of the receptacle (114) superimposed on the location of the one or more points (138) of the receptacle (114) with respect to a drawing of at least the second end (108) of the unload conveyance (104).

7. The agricultural machine according to claims 3 or 4, wherein the control unit (122) is electrically coupled to the radar module (120), and the radar module (120) is further configured to receive the input data and process the input data and the second signals for determining the location of the one or more points (138) of the receptacle (114) with respect to the location of the agricultural machine (100).

8. The agricultural machine according to claim 1, further comprising:
a control unit (122) mounted to the cab (110), the control unit (122) electrically coupled to the radar system (112); and
one or more actuators (124) connected between the chassis (102) and the unload conveyance (104), the one or more actuators (124) electrically coupled to the control unit (122), wherein the radar module (120) is further configured to generate one or more control signals based upon the location of the one or more points (138) of the receptacle (114) with respect to the second end (108) of the unload conveyance (104) and transmit the one or more control signals to the one or more actuators (124) via the control unit (122) for positioning the second end (108) of the unload conveyance (104) with respect to the location of the one or more points (138) of the receptacle (114).

9. The agricultural machine according to claim 1, wherein the one or more points (138) of the receptacle (114) comprises one or more reflectors (140), and wherein the second signals comprise reflections of the first signal from the one or more reflectors.

10. The agricultural machine according to claim 1, wherein the radar module (120) further comprises an angle of arrival module (168) configured to:
determine at least one phase difference between a frequency component of a first received frequency-domain signal for a first receiving antenna (136A) and a frequency component of a second received frequency-domain signal for at least one second receiving antenna (136B);
determine an angle of arrival of the second signals received by the first and at least one second receiving antennae based upon the at least one phase difference; and
determine the location of the one or more points (138) of the receptacle (114) based upon the angle of arrival and the distance to the one or more points (138).

## Patentansprüche

1. Landwirtschaftliche Maschine (100) mit:
einem Fahrgestell (102);
einer Entladefördereinrichtung (104), die ein erstes Ende (106), das mit dem Fahrgestell (102) verbunden ist, und ein zweites Ende (108) gegenüber von dem ersten Ende (106) aufweist; und
eine Kabine (110), die an dem Fahrgestell (102) angebracht ist,
**gekennzeichnet durch**
ein Radarsystem (112), das in Verbindung mit dem zweiten Ende (108) der Entladefördereinrichtung (104) angeordnet ist,
wobei das Radarsystem (112) umfasst:
mindestens eine Sendeantenne (134);
mindestens eine Empfangsantenne (136); und
ein Radarmodul (120), das dazu eingerichtet ist, ein erstes Signal zum Senden durch die mindestens eine Sendeantenne (134) zu verarbeiten und zweite Signale zu verarbeiten, die von der mindestens einen Empfangsantenne (136) empfangen werden, um den Ort von einem oder mehreren Punkten (138) einer Aufnahmeeinrichtung (114) in Bezug auf einen Ort der landwirtschaftlichen Maschine (100) zu ermitteln, wobei die zweiten Signale Reflektionen des ersten Signals von dem einen oder den mehreren Punkten (138) der Aufnahmeeinrichtung (114) aufweisen, **dadurch gekennzeichnet, dass** das Radarsystem (112) ein frequenzmoduliertes Dauerstrich-Radarsystem ist, wobei das erste Signal ein Dauerstrichsignal ist und wobei das Radarmodul (120) einen Signalerzeuger (148), der dazu eingerichtet ist, das Dauerstrichsignal zu erzeugen, und einen Modulator (150) umfasst, der dazu eingerichtet ist, das Dauerstrichsignal in der Frequenz zu modulieren,
wobei das Radarmodul (120) des Weiteren umfasst:
mindestens einen Demodulator (154), der dazu eingerichtet ist, die zweiten Signale zu demodulieren, die von der mindestens einen Empfangsantenne (136) empfangen werden, um ein gleichphasiges Quadratursignal für jede der mindestens einen Empfangsantenne (136) zu erzeugen;
mindestens einen Analog-Digital-Wandler (156), der dazu eingerichtet ist, ein digitales gleichphasiges Signal und ein digitales Quadratursignal für jede der mindestens einen Empfangsantenne (136) zu erzeugen;
mindestens einen Addierer (158), der dazu eingerichtet ist, das digitale gleichphasiges Signal und das digitale Quadratursignal für jede der mindestens einen Empfangsantenne (136) zu kombinieren, um ein komplexes Hüllkurvensignal für jede der mindestens einen Empfangsantenne (136) zu erzeugen;
mindestens einen Filter (160), der dazu eingerichtet ist, das Hüllkurvensignal für jede der mindestens einen Empfangsantenne (136) zu filtern;
mindestens ein FFT (*Schnelle Fourier Transformation*) - Modul (162), das dazu eingerichtet ist, das komplexe Hüllkurvensignal für jede der mindestens einen Empfangsantenne (136) zu verarbeiten, um ein empfangenes Frequenzbereichssignal für jede der mindestens einen Empfangsantenne (136) zu erzeugen und das frequenzmodulierte Dauerstrichsignal zu verarbeiten, um ein Referenz-Frequenzbereichssignal zu erzeugen;
mindestens ein Grenzwertmodul (164), das dazu eingerichtet ist, Frequenzanteile des empfangenen Frequenzbereichssignals für jede der mindestens einen Empfangsantenne (136) heraus zu filtern, die Amplituden aufweisen, die kleiner sind als ein vorbestimmter Grenzwert; und
mindestens ein Vergleichsmodul (166) zum Vergleichen von einem oder mehreren Frequenzanteilen von mindestens einem Grenzwert-gefilterten empfangenen Frequenzbereichssignals des empfangenen Frequenzbereichssignals für jede der mindestens einen Empfangsantenne (136) mit einem oder mehreren Frequenzanteilen des Referenz-Frequenzbereichssignals, um einen Abstand von dem einen oder den mehreren Punkten (138) der Aufnahmeeinrichtung (114) zu ermitteln.

2. Landwirtschaftliche Maschine nach Anspruch 1, des Weiteren einen Bildschirm (128) umfassend, der mit dem Radarsystem (112) in kommuniziert, und wobei das Radarmodul (120) des Weiteren dazu eingerichtet ist, den Ort des einen oder der mehreren Punkte (138) der Aufnahmeeinrichtung (114) an den Bildschirm (128) zum Anzeigen übermittelt.

3. Landwirtschaftliche Maschine nach Anspruch 2, des Weiteren eine Steuereinrichtung (122) umfassend, die mit dem Bildschirm (128) und einer Eingabeeinrichtung (126) zum Eingeben von Eingabedaten elektrisch verbunden ist, die eine oder mehreren Abmessungen der Aufnahmeeinrichtung (114) aufweisen.

4. Landwirtschaftliche Maschine nach Anspruch 2, des Weiteren eine Steuereinrichtung (122) umfassend, die mit dem Bildschirm (128) und einer Eingabeeinrichtung (126) zum Eingeben von Eingabedaten verbunden ist, die mit einem Herstellernamen und/oder Modell der Aufnahmeeinrichtung (114) verknüpft sind, wobei die Steuereinrichtung (122) ein Speichermedium (130) umfasst, das dazu eingerichtet ist, eine Mehrzahl von Bildern von Aufnahmeeinrichtungen (114) und damit verknüpfte Eingabedaten zu speichern.

5. Landwirtschaftliche Maschine nach Anspruch 3 oder 4, wobei der Bildschirm (128) dazu eingerichtet ist, ein Bild der Aufnahmeeinrichtung (114) auf Basis der eingegeben Eingabedaten anzuzeigen, wobei das Bild dem Ort des einen oder der mehreren Punkte (138) der Aufnahmeeinrichtung (114) überlagert ist.

6. Landwirtschaftliche Maschine nach Anspruch 5, wobei die Eingabedaten des Weiteren eine oder mehrere Abmessungen der landwirtschaftlichen Maschine (100) oder einen Herstellernamen und/oder Modell der landwirtschaftlichen Maschine (100) umfassen und wobei der Bildschirm (128) des Weiteren dazu eingerichtet ist, das Bild der Aufnahmeeinrichtung (114) überlagert mit dem Ort des einen oder der mehreren Punkte (138) der Aufnahmeeinrichtung (114) in Bezug auf ein Bild zumindest des zweiten Endes (108) der Entladefördereinrichtung (104) anzuzeigen.

7. Landwirtschaftliche Maschine nach Anspruch 3 oder 4, wobei die Steuereinrichtung (122) mit dem Radarmodul (120) elektrisch verbunden ist und das Radarmodul (120) des Weiteren dazu eingerichtet ist, die Eingabedaten zu empfangen und die Eingabedaten und die zweiten Signale zu verarbeiten, um den Ort des einen oder der mehreren Punkte (138) der Aufnahmeeinrichtung (114) in Bezug auf den Ort der landwirtschaftlichen Maschine (100) zu ermitteln.

8. Landwirtschaftliche Maschine nach Anspruch 1, des Weiteren umfassend:
eine Steuereinrichtung (122), die an der Kabine (110) angebracht ist, wobei die Steuereinrichtung (122) mit dem Radarsystem (112) elektrisch verbunden ist; und
eine oder mehrere Betätigungseinrichtungen (124), die zwischen dem Fahrgestell (102) und der Entladefördereinrichtung (104) verbunden sind, wobei die eine oder mehreren Betätigungseinrichtungen (124) mit der Steuereinrichtung (122) elektrisch verbunden sind, wobei das Radarmodul (120) des Weiteren dazu eingerichtet ist, ein oder mehrere Steuersignale auf Basis des Orts des einen oder der mehreren Punkte (138) der Aufnahmeeinrichtung (114) in Bezug auf das zweite Ende (108) der Entladefördereinrichtung (104) zu erzeugen und das eine oder die mehreren Steuersignale an die eine oder mehreren Betätigungseinrichtungen (124) mittels der Steuereinrichtung (122) zum Verstellen des zweiten Endes (108) der Entladefördereinrichtung (104) in Bezug auf den Ort des einen oder der mehreren Punkte (138) der Aufnahmeeinrichtung (114) zu übermitteln.

9. Landwirtschaftliche Maschine nach Anspruch 1, wobei der eine oder die mehreren Punkte (138) der Aufnahmeeinrichtung (114) eine oder mehrere Reflektionseinrichtungen (140) umfassen und wobei die zweiten Signale Reflektionen des ersten Signals von der einen oder den mehreren Reflektionseinrichtungen aufweisen.

10. Landwirtschaftliche Maschine nach Anspruch 1, wobei das Radarmodul (120) des Weiteren ein Einfallswinkelmodul (168) umfasst, das dazu eingerichtet ist:
mindestens eine Phasenverschiebung zwischen einem Frequenzanteil eines ersten empfangenen Frequenzbereichssignals für eine erste Empfangsantenne (136A) und einem Frequenzanteil eines zweiten empfangenen Frequenzbereichssignals für mindestens eine zweite Empfangsantenne (136B) zu ermitteln;
einen Einfallswinkel des zweiten Signals, das von der ersten und mindestens einer zweiten Empfangsantenne empfangen wird, auf Basis der mindestens einen Phasenverschiebung zu ermitteln; und
den Ort des einen oder der mehreren Punkte (138) der Aufnahmeeinrichtung (114) auf Basis des Einfallswinkels und des Abstands von dem einen oder den mehreren Punkten (138) zu ermitteln.

## Revendications

1. Machine agricole (100), comprenant :
un châssis (102) ;
un transporteur de déchargement (104) ayant une première extrémité (106) reliée au châssis (102) et une seconde extrémité (108) en face de la première extrémité (106) ; et
une cabine (110) montée sur le châssis (102),
**caractérisée par**
un système radar (112) positionné en association avec la seconde extrémité (108) du transporteur de déchargement (104),
le système radar (112) comprenant :
au moins une antenne de transmission (134) ;
au moins une antenne de réception (136) ; et
un module radar (120) configuré pour traiter un premier signal à transmettre par l'au moins une antenne de transmission (134) et pour traiter les seconds signaux reçus par l'au moins une antenne de réception (136) afin de déterminer l'emplacement d'un ou de plusieurs points (138) d'un réceptacle (114) par rapport à un emplacement de la machine agricole (100), dans lequel les seconds signaux comprennent des réflexions du premier signal sur le ou les points (138) du réceptacle (114), **caractérisé en ce que** le système radar (112) est un système radar à ondes continues modulé en fréquence, dans lequel le premier signal est un signal à ondes continues, et dans lequel le module radar (120) comprend un générateur de signal (148) configuré pour générer le signal à ondes continues et un modulateur (150) configuré pour moduler en fréquence le signal à ondes continues,
le module radar (120) comprenant en outre :
au moins un démodulateur (154) configuré pour démoduler les seconds signaux reçus par l'au moins une antenne de réception (136) afin de générer un signal en phase et un signal en quadrature pour chacune de l'au moins une antenne de réception (136) ;
au moins un convertisseur analogique-numérique (156) configuré pour générer un signal numérique en phase et un signal numérique en quadrature pour chacune de l'au moins une antenne de réception (136) ;
au moins un additionneur (158) configuré pour combiner le signal numérique en phase et le signal numérique en quadrature pour chacune de l'au moins une antenne de réception (136) afin de générer un signal d'enveloppe complexe pour chacune de l'au moins une antenne de réception (136) ;
au moins un filtre (160) configuré pour filtrer le signal d'enveloppe pour chacune de l'au moins une antenne de réception (136) ;
au moins une transformée de Fourier rapide (FFT) (162) configurée pour traiter le signal d'enveloppe complexe pour chacune de l'au moins une antenne de réception (136) afin de générer un signal reçu dans le domaine fréquentiel pour chacune de l'au moins une antenne de réception (136) et de traiter le signal à ondes continues modulé en fréquence afin de générer un signal de référence dans le domaine fréquentiel ;
au moins un module de seuil (164) configuré pour filtrer les composantes de fréquence du signal du domaine fréquentiel reçu pour chacune de l'au moins une antenne de réception (136) ayant des amplitudes inférieures à une valeur de seuil prédéterminée ; et
au moins un module de comparaison (166) pour comparer une ou plusieurs composantes de fréquence d'au moins un signal du domaine fréquentiel reçu filtré par seuil du signal du domaine fréquentiel reçu pour chacune de l'au moins une antenne de réception (136) à une ou plusieurs composantes de fréquence du signal du domaine fréquentiel de référence pour déterminer une distance par rapport à un ou à plusieurs points (138) du réceptacle (114).

2. Machine agricole selon la revendication 1, comprenant en outre un écran (128) en communication avec le système radar (112), et dans laquelle le module radar (120) est en outre configuré pour transmettre l'emplacement d'un ou de plusieurs points (138) du réceptacle (114) à l'écran (128) pour affichage.

3. Machine agricole selon la revendication 2, comprenant en outre une unité de commande (122) couplée électriquement à l'écran (128) et à une entrée (126) pour saisir des données d'entrée comprenant une ou plusieurs dimensions du réceptacle (114).

4. Machine agricole selon la revendication 2, comprenant en outre une unité de commande (122) couplée à l'écran (128) et à une entrée (126) pour saisir des données associées au nom du fabricant et/ou au modèle du réceptacle (114), dans laquelle l'unité de commande (122) comprend une mémoire (130) configurée pour stocker plusieurs images de réceptacles (114) et les données d'entrée associées.

5. Machine agricole selon les revendications 3 ou 4, dans laquelle l'écran (128) est configuré pour afficher un dessin du réceptacle (114) sur la base des données d'entrée saisies, dans laquelle le dessin est superposé à l'emplacement d'un ou de plusieurs points (138) du réceptacle (114).

6. Machine agricole selon la revendication 5, dans laquelle les données d'entrée comprennent en outre une ou plusieurs dimensions de la machine agricole (100) ou un nom de fabricant et/ou un modèle de la machine agricole (100), et dans laquelle l'écran (128) est en outre configuré pour afficher le dessin du réceptacle (114) superposé à l'emplacement d'un ou de plusieurs points (138) du réceptacle (114) par rapport à un dessin d'au moins la seconde extrémité (108) du transporteur de déchargement (104).

7. Machine agricole selon les revendications 3 ou 4, dans laquelle l'unité de commande (122) est couplée électriquement au module radar (120), et le module radar (120) est en outre configuré pour recevoir les données d'entrée et traiter les données d'entrée et les seconds signaux pour déterminer l'emplacement d'un ou de plusieurs points (138) du réceptacle (114) par rapport à l'emplacement de la machine agricole (100).

8. Machine agricole selon la revendication 1, comprenant en outre :
une unité de commande (122) montée sur la cabine (110), l'unité de commande (122) étant couplée électriquement au système radar (112) ; et
un ou plusieurs actionneurs (124) connectés entre le châssis (102) et le transporteur de déchargement (104), le ou les actionneurs (124) étant couplés électriquement à l'unité de commande (122), dans lequel le module radar (120) est en outre configuré pour générer un ou plusieurs signaux de commande basés sur l'emplacement du ou des points (138) du réceptacle (114) par rapport à la seconde extrémité (108) du transporteur de déchargement (104) et transmettre le ou les signaux de commande au ou aux actionneurs (124) par l'intermédiaire de l'unité de commande (122) pour positionner la seconde extrémité (108) du transporteur de déchargement (104) par rapport à l'emplacement du ou des points (138) du réceptacle (114).

9. Machine agricole selon la revendication 1, dans laquelle le ou les points (138) du réceptacle (114) comprennent un ou plusieurs réflecteurs (140), et dans laquelle les seconds signaux comprennent des réflexions du premier signal sur le ou les réflecteurs.

10. Machine agricole selon la revendication 1, dans laquelle le module radar (120) comprend en outre un module d'angle d'arrivée (168) configuré pour :
déterminer au moins une différence de phase entre une composante de fréquence d'un premier signal reçu dans le domaine fréquentiel pour une première antenne de réception (136A) et une composante de fréquence d'un second signal reçu dans le domaine fréquentiel pour au moins une seconde antenne de réception (136B) ;
déterminer un angle d'arrivée des seconds signaux reçus par la première et au moins une seconde antenne de réception sur la base d'au moins une différence de phase ; et
déterminer l'emplacement d'un ou de plusieurs points (138) du réceptacle (114) en fonction de l'angle d'arrivée et de la distance par rapport à un ou plusieurs points (138).
